# EUROPÄISCHE PATENTSCHRIFT

(11) **EP 1 455 312 B1**
(45) Veröffentlichungstag und Bekanntmachung des Hinweises auf die Patenterteilung: **14.03.2007**
(21) Anmeldenummer: 04002730.2
(22) Anmeldetag: 07.02.2004
(51) Int. Cl.: G07C 5/00, H04Q 7/32, G08G 1/09

(54) **Verfahren und Einrichtung zur Wartung von sicherheitsrelevanten Programmcode eines Kraftfahrzeuges**
Method and apparatus for maintenance of security sensitive program code of a vehicle
Procédé et dispositif pour la maintenance de code de programmation de sécurité d'un vehicule

(30) Priorität: 05.03.2003 DE 10309507
(43) Veröffentlichungstag der Anmeldung: 08.09.2004
(73) Patentinhaber: Volkswagen Aktiengesellschaft, 38436 Wolfsburg (DE)
(72) Erfinder: Aijaz, Amer, 38165 Lehre (DE)

(56) Entgegenhaltungen:
- EP-A- 0 999 099
- EP-A- 1 076 431
- EP-A- 1 352 788
- DE-A- 10 038 096
- DE-A- 10 047 919
- DE-A- 10 131 395
- DE-A- 19 750 372
- US-A- 5 381 138
- US-A- 5 442 553

## Beschreibung

Die Erfindung betrifft ein Verfahren und eine Einrichtung zum Parametrieren, Laden und/oder Verändern von sicherheitsrelevantem Programmcode, der auf einem Datenspeicher auf einem Kraftfahrzeug gespeichert ist und mittels dessen Funktionen auf dem Kraftfahrzeug implementiert sind, die die Fahrsicherheit des Kraftfahrzeugs betreffen. Die Erfindung betrifft ferner ein diesbezüglich ausgebildetes Kraftfahrzeug. Kraftfahrzeug im Sinne der Erfindung ist insbesondere ein individuell im Straßenverkehr benutzbares Landfahrzeug. Ein Kraftfahrzeug im Sinne der Erfindung ist insbesondere nicht auf Landfahrzeuge mit Verbrennungsmotor beschränkt. Sicherheitsrelevanter Programmcode im Sinne der Erfindung ist Programmcode, der die Fahrsicherheit des Kraftfahrzeugs betrifft. Beispiele für sicherheitsrelevanten Programmcode im Sinne der Erfindung sind z.B. Programme für Antiblockiersysteme, Antischlupfregelungen und Fahrdynamikregelungen. Solche Programme werden üblicherweise nur in zertifizierten Werkstätten gewartet, also z.B. parametriert, geladen und/oder verändert.

Die DE 100 38 096 A1 offenbart ein Verfahren zur Übertragung von Daten, insbesondere von Programmen oder Software, zwischen einem anbieterseitigen Datenverarbeitungsgerät und einem benutzerseitigen Datenverarbeitungsgerät, insbesondere einem programmierbaren Steuergerät in einem Kraftfahrzeug, wobei das anbieterseitige Datenverarbeitungsgerät und das benutzerseitige Datenverarbeitungsgerät jeweils mit einer Sende-/Empfangseinrichtung zum drahtlosen Senden bzw. Empfangen der Daten in Wirkverbindung stehen. Die Daten werden nach Übertragung von einer der Sende/Empfangseinrichtungen auf die jeweils andere Sende-/Empfangseinrichtung zunächst auf einen Zwischenspeicher gegeben bzw. zwischengespeichert und erst bei Vorliegen eines vordefinierten benutzerseitigen oder anbieterseitigen Betriebszustandes in das jeweilige Datenverarbeitungsgerät eingelesen bzw. geladen.

Die EP 1 076 431 A2 offenbart ein digitales Übertragungssystem zur Übertragung von Daten für ein Navigationssystem an ein Kraftfahrzeug.

Die EP 0 999 099 A1 offenbart ein Verfahren zum Umprogrammieren eines eine Steuereinheit aufweisende Gerätes, insbesondere in Kraftfahrzeugen, wobei mit einem Funksignal ein Datensatz eines Programmcodes der Steuereinheit verändert wird.

Es ist Aufgabe der Erfindung, die Wartung eingangs genannter Programme zu verbessern.

Vorgenannte Aufgabe wird durch ein Verfahren gemäß Anspruch 1 bzw. durch eine Datenverarbeitungsanlage gemäß Anspruch 37 gelöst.

In vorteilhafter Ausgestaltung der Erfindung wird vor der Übertragung der Daten zum Parametrieren, Laden und/oder Verändern des sicherheitsrelevanten Programmcodes ein Zertifikat von dem Wartungszentrum an das Kraftfahrzeug, insbesondere über den oder einen weiteren öffentlich zugänglichen Nachrichtenkanal, übertragen. Zudem erfolgt in vorteilhafter Ausgestaltung der Erfindung nach der Übertragung des Zertifikates und vor der Übertragung der Daten zum Parametrieren, Laden und/oder Verändern des sicherheitsrelevanten Programmcodes eine Autorisierung des Wartungszentrums.

In weiterhin vorteilhafter Ausgestaltung der Erfindung wird zur Erstellung des Zertifikates, insbesondere in einer von dem Wartungszentrum verschiedenen Verschlüsselungszentrale, ein Identifizierungsdokument erzeugt, dass zumindest einen ersten öffentlichen Datenverschlüsselungsschlüssel k enthält. Das Identifizierungsdokument kann auch Zugangsberechtigungsinformationen z.B. in verschiedenen Sicherheitsstufen sowie Informationen zur Identifizierung des Wartungszentrums enthalten.

In weiterhin vorteilhafter Ausgestaltung der Erfindung wird zur Generierung des Zertifikates, insbesondere in der von dem Wartungszentrum verschiedenen Verschlüsselungszentrale, aus dem Identifizierungsdokument ein Hashwert gebildet. Beispiele für Hashwerte können z.B. dem Aufsatz von M. Naor and M. Yung 'Universal One-Way Hash Functions and Their Cryptographic Applications', Proceedings of the Twenty First Annual ACM Symposium on Theory of Computing, USA entnommen werden.

In weiterhin vorteilhafter Ausgestaltung der Erfindung wird aus dem Hashwert, insbesondere in der von dem Wartungszentrum verschiedenen Verschlüsselungszentrale, durch Verschlüsselung mit einem zweiten privaten Datenverschlüsselungsschlüssel ε* (private key) ein verschlüsselter Hashwert gebildet.

In weiterhin vorteilhafter Ausgestaltung der Erfindung wird das Zertifikat, insbesondere in der von dem Wartungszentrum verschiedenen Verschlüsselungszentrale, aus dem Identifizierungsdokument und dem verschlüsseltem Hashwert zusammengesetzt.

In weiterhin vorteilhafter Ausgestaltung der Erfindung wird das Zertifikat von einer von dem Wartungszentrum verschiedenen Verschlüsselungszentrale an das Wartungszentrum, insbesondere über den oder einen weiteren öffentlich zugänglichen Nachrichtenkanal, übertragen.

In weiterhin vorteilhafter Ausgestaltung der Erfindung wird der verschlüsselte Hashwert, insbesondere mittels eines zweiten öffentlichen zum zweiten privaten Datenverschlüsselungsschlüssel ε* gehörigen Datenentschlüsselungsschlüssel ε (public key), von dem Kraftfahrzeug entschlüsselt.

In weiterhin vorteilhafter Ausgestaltung der Erfindung wird von dem Kraftfahrzeug ein eigener Hashwert bebildet und mit dem verschlüsselten Hashwert verglichen.

In weiterhin vorteilhafter Ausgestaltung der Erfindung wird das Zertifikat als nicht-manipuliert angesehen, wenn der verschlüsselte Hashwert mit dem eigenen Hashwert übereinstimmt.

In weiterhin vorteilhafter Ausgestaltung der Erfindung wird von dem Kraftfahrzeug eine Testsequenz mit dem ersten öffentlichen Datenverschlüsselungsschlüssel k verschlüsselt.

In weiterhin vorteilhafter Ausgestaltung der Erfindung ist die Testsequenz eine Folge von Zufallszeichen, die vom Kraftfahrzeug erzeugt wird.

In weiterhin vorteilhafter Ausgestaltung der Erfindung wird die mit dem ersten öffentlichen Datenverschlüsselungsschlüssel k verschlüsselte Testsequenz, insbesondere über den oder einen weiteren öffentlich zugänglichen Nachrichtenkanal, an das Wartungszentrum übertragen.

In weiterhin vorteilhafter Ausgestaltung der Erfindung wird die mit dem ersten öffentlichen Datenverschlüsselungsschlüssel k verschlüsselte Testsequenz im Wartungszentrum mittels eines ersten privaten zum ersten öffentlichen Datenverschlüsselungsschlüssel k gehörigen Datenentschlüsselungsschlüssels k* entschlüsselt.

In weiterhin vorteilhafter Ausgestaltung der Erfindung wird im Wartungszentrum mittels eines sowohl dem Wartungszentrum als auch dem Kraftfahrzeug bekannten Antwortalgorithmus eine Testsequenz-Antwort erzeugt und diese mittels des ersten privaten Datenentschlüsselungsschlüssels k* verschlüsselt.

In weiterhin vorteilhafter Ausgestaltung der Erfindung wird die mit dem ersten privaten Datenentschlüsselungsschlüssel k* verschlüsselte Testsequenz-Antwort, insbesondere über den oder einen weiteren öffentlich zugänglichen Nachrichtenkanal, an das Kraftfahrzeug übertragen.

In weiterhin vorteilhafter Ausgestaltung der Erfindung wird die mit dem ersten privaten Datenentschlüsselungsschlüssel k* verschlüsselte Testsequenz-Antwort vom Kraftfahrzeug mit dem öffentlichen Datenverschlüsselungsschlüssel k entschlüsselt und auf Korrektheit überprüft.

In weiterhin vorteilhafter Ausgestaltung der Erfindung sieht das Kraftfahrzeug das Wartungszentrum als autorisiert an, wenn die Testsequenz-Antwort als korrekt angesehen wird.

In weiterhin vorteilhafter Ausgestaltung der Erfindung wird von dem Kraftfahrzeug ein temporärer, insbesondere nur für eine Übertragung gültiger, dritter (geheimer) Datenverschlüsselungsschlüssel s (secret key), vorteilhafterweise in Abhängigkeit einer Zufallszahlenfolge, gebildet.

In weiterhin vorteilhafter Ausgestaltung der Erfindung wird der dritte Datenverschlüsselungsschlüssel s, insbesondere mittels des ersten öffentlichen Datenverschlüsselungsschlüssels k, verschlüsselt.

In weiterhin vorteilhafter Ausgestaltung der Erfindung wird der mit dem ersten öffentlichen Datenverschlüsselungsschlüssel k verschlüsselte dritte Datenverschlüsselungsschlüssel s, insbesondere über den oder einen weiteren öffentlich zugänglichen Nachrichtenkanal, an das Wartungszentrum übertragen.

In weiterhin vorteilhafter Ausgestaltung der Erfindung wird der mit dem ersten öffentlichen Datenverschlüsselungsschlüssel k verschlüsselte dritte Datenverschlüsselungsschlüssel s (im Wartungszentrum) mittels des ersten privaten zum ersten öffentlichen Datenverschlüsselungsschlüssel k gehörigen Datenentschlüsselungsschlüssels k* entschlüsselt.

In weiterhin vorteilhafter Ausgestaltung der Erfindung werden die Daten zum Parametrieren, Laden und/oder Verändern des sicherheitsrelevanten Programmcodes mit dem dritten Datenverschlüsselungsschlüssel s verschlüsselt und, insbesondere über den oder einen weiteren öffentlich zugänglichen Nachrichtenkanal, an das Kraftfahrzeug übertragen.

In weiterhin vorteilhafter Ausgestaltung der Erfindung werden die mit dem dritten Datenverschlüsselungsschlüssel s verschlüsselten Daten zum Parametrieren, Laden und/oder Verändern des sicherheitsrelevanten Programmcodes vom Kraftfahrzeug mittels des dritten Datenverschlüsselungsschlüssels s entschlüsselt.

Die vorgenannten vorteilhaften Ausgestaltungen sind besonders in Bezug auf unberechtigte Datenmanipulation sichere Ausgestaltungen mit wechselseitiger Kommunikation. Die folgenden vorteilhaften Ausgestaltungen sind besonders zum Parametrieren, Laden und/oder Verändern des sicherheitsrelevanten Programmcodes einer Vielzahl von Kraftfahrzeugen geeignet.

In weiterhin vorteilhafter Ausgestaltung der Erfindung wird vor der Übertragung der Daten zum Parametrieren, Laden und/oder Verändern des sicherheitsrelevanten Programmcodes eine Zeichenfolge, die vorteilhafterweise eine Zufallszeichenfolge ist, von dem Wartungszentrum an das Kraftfahrzeug, insbesondere über den oder einen weiteren öffentlich zugänglichen Nachrichtenkanal, übertragen.

In weiterhin vorteilhafter Ausgestaltung der Erfindung wird die Zeichenfolge vor der Übertragung von dem Wartungszentrum an das Kraftfahrzeug mittels eines ersten Datenverschlüsselungsschlüssels p verschlüsselt.

In weiterhin vorteilhafter Ausgestaltung der Erfindung wird die mit dem ersten Datenverschlüsselungsschlüssel p verschlüsselte Zeichenfolge von dem Wartungszentrum an das Kraftfahrzeug übertragen.

In weiterhin vorteilhafter Ausgestaltung der Erfindung wird die mit dem ersten Datenverschlüsselungsschlüssel p verschlüsselte Zeichenfolge von dem Wartungszentrum an das Kraftfahrzeug übertragen. Diese wird in weiterhin vorteilhafter Ausgestaltung der Erfindung von dem Kraftfahrzeug mittels einem zum ersten Datenverschlüsselungsschlüssel p gehörigen ersten Datenentschlüsselungsschlüssel p*, der vorteilhafterweise einer Mehrzahl von Kraftfahrzeugen bekannt ist, entschlüsselt.

In weiterhin vorteilhafter Ausgestaltung der Erfindung wird in der Wartungszentrale aus der Zeichenfolge ein zweiter, insbesondere temporärer, Datenverschlüsselungsschlüssel b gebildet. Zudem wird in weiterhin vorteilhafter Ausgestaltung der Erfindung vom Kraftfahrzeug aus der Zeichenfolge der zweite, insbesondere temporäre, zum Datenverschlüsselungsschlüssel b gebildet. Es ist auch möglich, dass vom Wartungszentrum/Kraftfahrzeug statt eines Schlüssels ein Schlüsselpaar gebildet wird.

In weiterhin vorteilhafter Ausgestaltung der Erfindung werden die Daten zum Parametrieren, Laden und/oder Verändern des sicherheitsrelevanten Programmcodes mit dem zweiten (geheimen) Datenverschlüsselungsschlüssel b verschlüsselt und, insbesondere über den oder einen weiteren öffentlich zugänglichen Nachrichtenkanal, an das Kraftfahrzeug oder an eine Mehrzahl von Kraftfahrzeugen übertragen. Die mit dem zweiten (geheimen) Datenverschlüsselungsschlüssel b verschlüsselten Daten zum Parametrieren, Laden und/oder Verändern des sicherheitsrelevanten Programmcodes werden vom Kraftfahrzeug in weiterhin vorteilhafter Ausgestaltung der Erfindung mittels des zweiten Datenverschlüsselungsschlüssels b entschlüsselt.

In vorteilhafter Ausgestaltung der Erfindung werden Daten zum Parametrieren, Laden und/oder Verändern des sicherheitsrelevanten Programmcodes mittels eines temporären Datenentschlüsselungsschlüssels verschlüsselt übertragen. Dieser wird vorteilhafterweise speziell für die Übertragung der Daten zum Parametrieren, Laden und/oder Verändern des sicherheitsrelevanten Programmcodes, also für eine Wartungsmaßnahme, erzeugt. In weiterhin vorteilhafter Ausgestaltung der Erfindung wird der temporäre Datenentschlüsselungsschlüssel dafür in Abhängigkeit einer Zufallszeichenfolge erzeugt.

Vorgenannte Aufgabe wird - wie bereits ausgeführt - durch eine Datenverarbeitungsanlage für ein Kraftfahrzeug zum Parametrieren, Laden und/oder Verändern von sicherheitsrelevantem Programmcode bzw. durch ein Kraftfahrzeug mit einer solchen Datenverarbeitungsanlage gelöst, wobei die Datenverarbeitungsanlage einen Datenspeicher aufweist, in dem der sicherheitsrelevante Programmcode gespeichert ist, mittels dessen Funktionen auf dem Kraftfahrzeug implementiert sind, die die Fahrsicherheit des Kraftfahrzeugs betreffen, und wobei der Datenspeicher, in dem der sicherheitsrelevante Programmcode gespeichert ist, datentechnisch mit einer Schnittstelle für einem öffentlich zugänglichen Nachrichtenkanal verbunden ist. Vorteilhafte Ausgestaltungen ergeben sich insbesondere durch eine derartige Ausgestaltung der Datenverarbeitungsanlage, so dass von dieser die vorgenannten Verfahrensschritte, die das Kraftfahrzeug bereffen, ausgeführt werden können.

Dabei weist die Datenverarbeitungsanlage in vorteilhafter Ausgestaltung der Erfindung eine Computeranordnung zur Entschlüsselung verschlüsselt übermittelter Daten zum Parametrieren, Laden und/oder Verändern des sicherheitsrelevanten Programmcodes auf. Die Computeranordnung ist in weiterhin vorteilhafter Ausgestaltung der Erfindung zur Erzeugung einer Testzeichenfolge und insbesondere auch zur Verschlüsselung der Testzeichenfolge ausgebildet. In weiterhin vorteilhafter Ausgestaltung der Erfindung enthält die Datenverarbeitungsanlage bzw. die Computeranordnung eine Funktion, mittels derer aus einer empfangenen Zeichenfolge ein Datenentschlüsselungsschlüssel b zur Ver- und Entschlüsselung verschlüsselt übermittelter Daten zum Parametrieren, Laden und/oder Verändern des sicherheitsrelevanten Programmcodes errechenbar ist.

Vorgenannte Verfahren und Einrichtungen sind auch zum Parametrieren, Laden und/oder Verändern des weniger oder nicht sicherheitsrelevanten Programmcodes verwendbar, sind jedoch zum Parametrieren, Laden und/oder Verändern des weniger oder nicht sicherheitsrelevanten Programmcodes besonders vorteilhaft und von besonderer wirtschaftlicher Bedeutung.

Weitere Vorteile und Einzelheiten ergeben sich aus der nachfolgenden Beschreibung von Ausführungsbeispielen. Dabei zeigen:
- Fig. 1: eine Ausgestaltung einer Einrichtung zum Parametrieren, Laden und/oder Verändern von sicherheitsrelevantem Programmcode,
- Fig. 2: eine Ausgestaltung einer Datenverarbeitungsanlage für ein Kraftfahrzeug,
- Fig. 3: eine weitere Ausgestaltung einer Einrichtung zum Parametrieren, Laden und/oder Verändern von sicherheitsrelevantem Programmcode,
- Fig. 4: ein Verfahren zum Erzeugen eines Zertifikates,
- Fig. 5: ein Verfahren zur Übertragung von Daten zum Parametrieren, Laden und/oder Verändern von sicherheitsrelevantem Programmcode,
- Fig. 6: eine Legalisierungsphase,
- Fig. 7: eine Autorisierungsphase,
- Fig. 8: eine Datenübertragungsphase und
- Fig. 9: ein Verfahren zur Übertragung von Daten zum Parametrieren, Laden und/oder Verändern von sicherheitsrelevantem Programmcode.

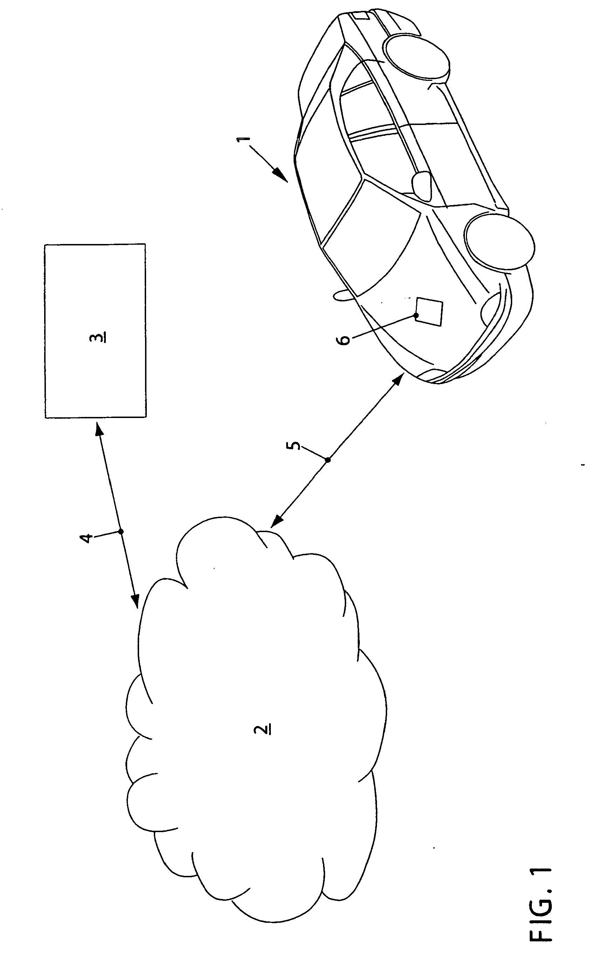

Fig. 1 zeigt eine Ausgestaltung einer Einrichtung zum Parametrieren, Laden und/oder Verändern von sicherheitsrelevantem Programmcode, mittels dessen Funktionen auf einem Kraftfahrzeug 1 implementiert sind, die die Fahrsicherheit des Kraftfahrzeugs 1 betreffen. Beispiele für sicherheitsrelevanten Programmcode im Sinne der Erfindung sind z.B. Programme für Antiblockiersysteme, Antischlupfregelungen und Fahrdynamikregelungen. Zum Parametrieren, Laden und/oder Verändern des sicherheitsrelevanten Programmcodes werden Daten zum Parametrieren, Laden und/oder Verändern des sicherheitsrelevanten Programmcodes über einen öffentlich zugänglichen Nachrichtenkanal 2, insbesondere eine internetartige Verbindung wie z.B. E-Mail, von einem Wartungszentrum 3 an das Kraftfahrzeug 1 übertragen. Die Doppelpfeile 4 und 5 deuten an, dass dazu sowohl Nachrichten von dem Wartungszentrum 3 an das Kraftfahrzeug 1 als auch Nachrichten von dem Kraftfahrzeug 1 an das Wartungszentrum 3 übertragen werden können. Dazu ist auf dem Kraftfahrzeug 1 eine Datenverarbeitungsanlage 6 angeordnet.

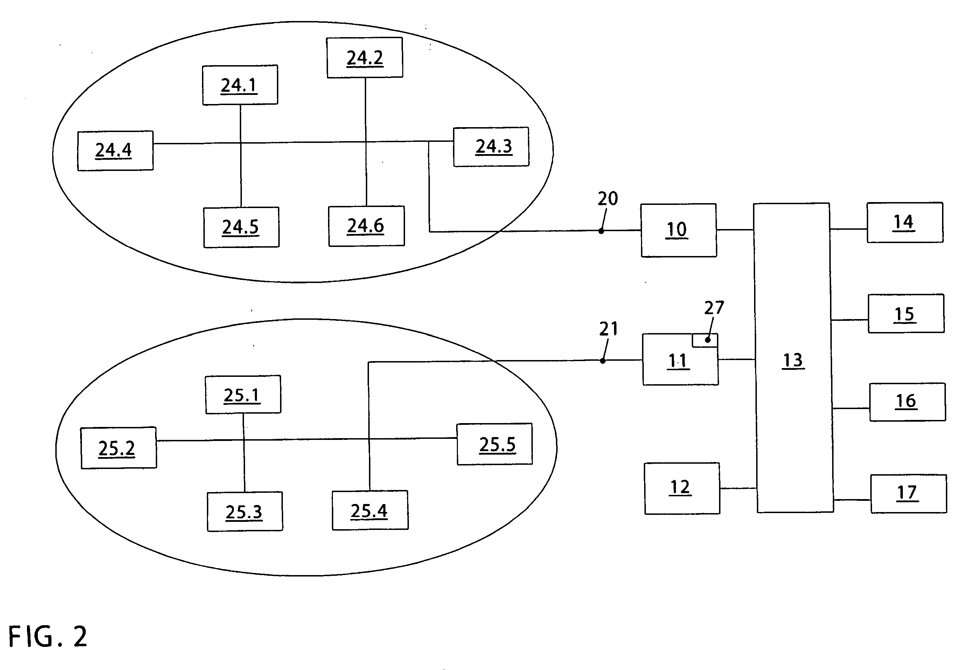

Fig. 2 zeigt eine mögliche Ausgestaltung einer solchen auf dem Kraftfahrzeug 1 angeordneten Datenverarbeitungsanlage 6. Diese weist eine Computeranordnung 11 mit einem Datenspeicher 27 auf, mittels dessen sicherheitsrelevanter Programmcode zur Implementierung die Fahrsicherheit des Kraftfahrzeugs 1 betreffender Funktionen gespeichert sind. Die Computeranordnung 11 ist beispielsweise über einen CAN Bus 21 mit die Fahrsicherheit des Kraftfahrzeugs 1 betreffenden Komponenten 25.1, 25.2, 25.3, 25.4 und 25.5, wie etwa einer Antischlupfreglung, verbunden. Der Datenspeicher 27 kann auch separat oder ganz oder teilweise auf die Komponenten 25.1, 25.2, 25.3, 25.4 und 25.5 verteilt ausgeführt sein. Der Datenspeicher 27 ist mittels der Computeranordnung 11 über ein Verbindungsmodul 13 datentechnisch mit einer oder mehreren Schnittstellen zu einem oder mehreren öffentlich zugänglichen Nachrichtenkanälen verbunden. In beispielhafter Ausgestaltung ist vorgesehen, dass das Verbindungsmodul 13 mit einer Bluetooth Schnittstelle 14, einer WLAN Schnittstelle 15, einer GSM/GRPS Schnittstelle 16 und einer Funkschnittstelle17 verbunden ist.

In beispielhafter Ausgestaltung ist ein Infotainmentmodul 10 vorgesehen, das über das Verbindungsmodul 13 mit zumindest einer der Schnittstellen wie die Bluetooth Schnittstelle 14, die WLAN Schnittstelle 15, die GSM/GRPS Schnittstelle 16 und die Funkschnittstelle17 verbunden ist, so dass Informationen oder Unterhaltungsdaten für Personen in dem Kraftfahrzeug geladen und/oder versendet werden können. So ist z.B. Internetzugang bzw. die Versendung und der Empfang von E-mails mittels einiger von in dem Kraftfahrzeug angeordneter Terminals 24.1, 24.2, 24.3, 24.4, 24.5 und 24.6 möglich. Das Infotainmentmodul 10 und die Terminals 24.1, 24.2, 24.3, 24.4, 24.5 und 24.6 sind mittels eines MOST Netzwerkes 20 miteinander verbunden. Das Infotainmentmodul 10 und die Computeranordnung 11 sind sowohl softwaretechnisch als auch hardwaretechnisch getrennt.

In beispielhafter Ausgestaltung ist zudem ein nicht-sicherheitsrelevantes Modul 12 vorgesehen, das über das Verbindungsmodul 13 mit zumindest einer der Schnittstellen wie die Bluetooth Schnittstelle 14, die WLAN Schnittstelle 15, sie GSM/GRPS Schnittstelle 16 und die Funkschnittstelle17 zum Parametrieren, Laden und/oder Verändern des nicht-sicherheitsrelevanten Programmcodes verbunden ist, der z.B. Licht, Heizung oder Klimaregelung des Kraftfahrzeugs 1 betrifft.

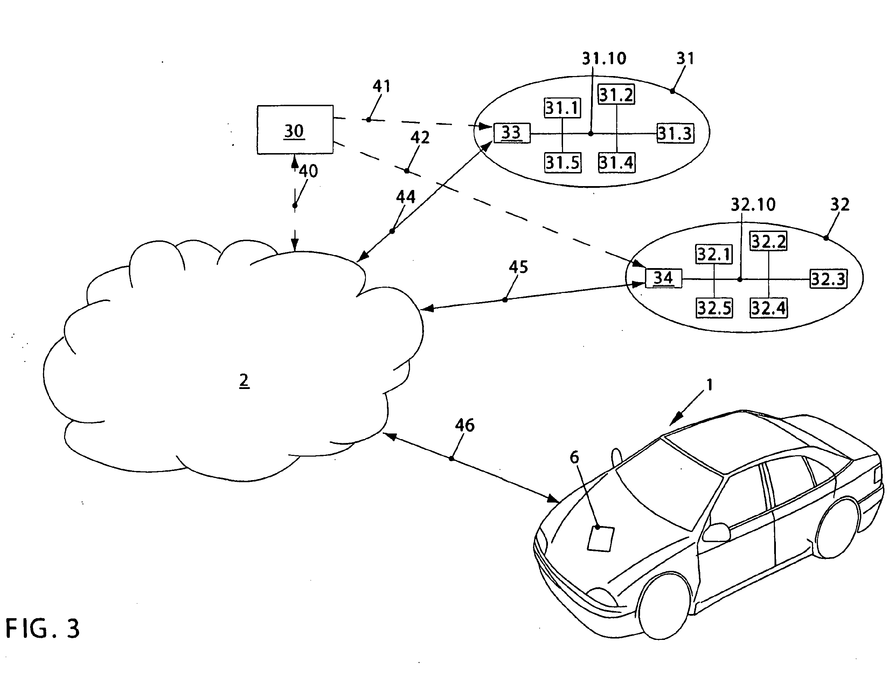

Fig. 3 zeigt eine weitere Ausgestaltung einer Einrichtung zum Parametrieren, Laden und/oder Verändern von sicherheitsrelevantem Programmcode eines Kraftfahrzeuges 1 über einen öffentlich zugänglichen Nachrichtenkanal 2 wie etwa das Internet. Die Einrichtung zum Parametrieren, Laden und/oder Verändern von sicherheitsrelevantem Programmcode weist zumindest zwei Wartungszentren 31 und 32 auf. Die Wartungszentren 31 sowie 32 weisen je Recheneinrichtungen 31.1, 31.2, 31.3, 31.4 und 31.5 sowie 32.1, 32.2, 32.3, 32.4 und 32.5 auf, die je über ein Netzwerk 31.10 sowie 32.10 mit je einem Wartungsserver 33 bzw. 34 verbunden sind. Es ist vorgesehen, dass der sicherheitsrelevante Programmcode bzw. Daten zum Parametrieren, Laden und/oder Verändern des sicherheitsrelevanten Programmcodes auf Recheneinrichtungen 31.1, 31.2, 31.3, 31.4 und 31.5 sowie 32.1, 32.2, 32.3, 32.4 und 32.5 erarbeitet werden. In vorteilhafter Weise ist jedoch vorgesehen, dass allein die Wartungsserver 33 und 34 autorisiert sind, mit dem Kraftfahrzeug 1 zu kommunizieren. Es ist weiterhin vorteilhafterweise vorgesehen, dass die Wartungsserver 33 und 34 besonders gegen Diebstahl gesichert sind. Die Doppelpfeile 44, 45 und 46 deuten an, dass sowohl zwischen dem Wartungsserver 33, und damit dem Wartungszentrum 31 und dem Kraftfahrzeug 1 sowie zwischen dem Wartungsserver 34, und damit dem Wartungszentrum 32 und dem Kraftfahrzeug 1 über den öffentlichen Nachrichtenkanal 2 eine bidirektionale Kommunikation möglich bzw. aufbaubar ist.

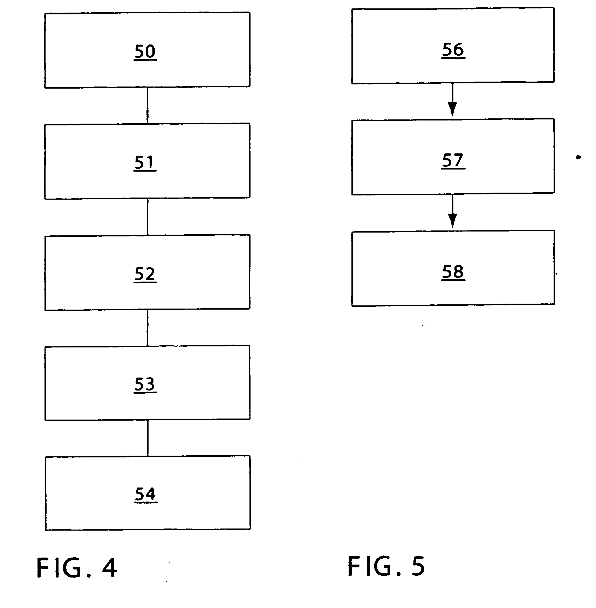

Es ist zudem eine Verschlüsselungszentrale 30 vorgesehen, deren Funktion anhand von Fig. 4 in Zusammenhang mit den gestrichelten Pfeilen 40, 41 und 42 erläutert wird.

Fig. 4 zeigt ein Verfahren zum Erzeugen eines Zertifikates, mittels dessen sich ein Wartungszentrum 3, 31, 32 bzw. ein Wartungsserver 33, 34 gegenüber einem Kraftfahrzeug legalisiert. Dazu wird in einem Schritt 50 zur Erstellung des Zertifikates ein Identifizierungsdokument X erzeugt, dass zumindest einen ersten öffentlichen Datenverschlüsselungsschlüssel k enthält. Das Identifizierungsdokument X kann auch Zugangsberechtigungsinformationen z.B. in verschiedenen Sicherheitsstufen sowie Informationen zur Identifizierung der oder zumindest eines der Wartungszentren 3, 31, 32 enthalten.

In einem nächsten Schritt 51 wird aus dem Identifizierungsdokument X ein Hashwert h, z.B. gemäß dem in dem Aufsatz von M. Naor and M. Yung 'Universal One-Way Hash Functions and Their Cryptographic Applications', Proceedings of the Twenty First Annual ACM Symposium on Theory of Computing, USA offenbarten Verfahren, gebildet. Dem Schritt 51 folgt ein Schritt 52 in dem aus dem Hashwert h durch Verschlüsselung mit einem zweiten privaten Datenverschlüsselungsschlüssel ε* ein verschlüsselter Hashwert h' gebildet wird. In einem weiteren Schritt 53 wird das Zertifikat aus dem Identifizierungsdokument X und dem verschlüsseltem Hashwert h' zusammengesetzt.

In weiterhin vorteilhafter Ausgestaltung der Erfindung ist vorgesehen, dass die Schritte 50, 51, 52 und 53 zur Bildung des Zertifikates nicht in einem Wartungszentrum 31 bzw. 32, sondern in der Verschlüsselungszentrale 30 ablaufen. In diesem Fall folgt dem Schritt 53 ein Schritt 54, in dem das Zertifikat von der Verschlüsselungszentrale 30 an eines oder mehrere der Wartungszentren 31, 32 übertragen wird. Diese Übertragung kann über den öffentlich zugänglichen Nachrichtenkanal 2 erfolgen, was durch den gestrichelten Pfeil 40 angedeutet ist. Vorgenannte Übertragung kann aber auch auf andere Weise erfolgen, was durch die gestrichelten Pfeile 41 und 42 angedeutet ist.

Fig. 5 zeigt ein Verfahren zur Übertragung von Daten zum Parametrieren, Laden und/oder Verändern von sicherheitsrelevantem Programmcode. Die Übertragung von Daten zum Parametrieren, Laden und/oder Verändern von sicherheitsrelevantem Programmcode gliedert sich in eine Legalisierungsphase 56, eine Autorisierungsphase 57 und eine Datenübertragungsphase 58.

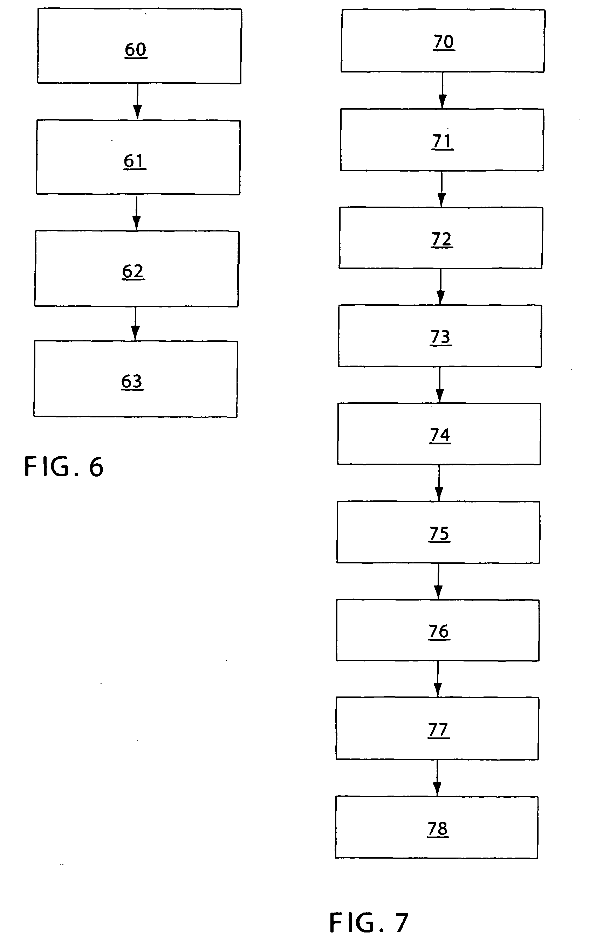

Fig. 6 zeigt ein Ausführungsbeispiel für Verfahrensschritte einer Legalisierungsphase 56. Dabei wird das Zertifikat in einem Schritt 60 von dem Wartungszentrum 3, 31 oder 32 an das Kraftfahrzeug 1 über den öffentlich zugänglichen Nachrichtenkanal 2 übertragen. Danach wird der im Zertifikat enthaltene verschlüsselte Hashwert h' in einem Schritt 61 mittels eines zweiten öffentlichen zum zweiten privaten Datenverschlüsselungsschlüssel ε* gehörigen Datenentschlüsselungsschlüssels ε auf dem Kraftfahrzeug 1 von der Datenverarbeitungsanlage 6 entschlüsselt. Dem Schritt 61 folgt ein Schritt 62, in dem von dem Kraftfahrzeug 1 ein eigener Hashwert h- gebildet wird. Dieser wird in einem Schritt 63 mit dem Hashwert h verglichen. Das Zertifikat wird als nicht-manipuliert angesehen, wenn der Hashwert h mit dem eigenen Hashwert h- übereinstimmt. In diesem Fall ist das entsprechende Wartungszentrum 3, 31 oder 32 legalisiert.

Fig. 7 zeigt ein Ausführungsbeispiel für Verfahrensschritte einer Autorisierungsphase 57. Dabei wird von dem Kraftfahrzeug 1 nach erfolgreicher Legalisierung in einem Schritt 70 eine Testsequenz, die eine Folge von Zufallszeichen ist, erzeugt und in einem weiteren Schritt 71 mit dem ersten öffentlichen Datenverschlüsselungsschlüssel k verschlüsselt. Die so mit dem ersten öffentlichen Datenverschlüsselungsschlüssel k verschlüsselte Testsequenz wird in einem weiteren Schritt 72 über den öffentlich zugänglichen Nachrichtenkanal 2 an das entsprechende Wartungszentrum 3, 31 oder 32 übertragen.

In dem entsprechenden Wartungszentrum 3, 31 oder 32 wird die mit dem ersten öffentlichen Datenverschlüsselungsschlüssel k verschlüsselte Testsequenz in einem Schritt 74 mittels einem ersten privaten zum ersten öffentlichen Datenverschlüsselungsschlüssel k gehörigen Datenentschlüsselungsschlüssel k* entschlüsselt. Danach wird in einem dem Schritt 74 folgenden Schritt 75 in dem entsprechenden Wartungszentrum 3, 31 oder 32 mittels eines sowohl dem entsprechenden Wartungszentrum 3, 31 oder 32 als auch dem Kraftfahrzeug 1 bekannten Antwortalgorithmus eine Testsequenz-Antwort erzeugt und diese mittels des ersten privaten Datenentschlüsselungsschlüssels k* verschlüsselt. In einem weiteren Schritt 76 wird die mit dem ersten privaten Datenentschlüsselungsschlüssel k* verschlüsselte Testsequenz-Antwort über den öffentlich zugänglichen Nachrichtenkanal 2 an das Kraftfahrzeug 1 übertragen.

Von der Datenverarbeitungsanlage 6 auf dem Kraftfahrzeug wird in einem Schritt 77 die mit dem ersten privaten Datenentschlüsselungsschlüssel k* verschlüsselte Testsequenz-Antwort vom Kraftfahrzeug mit dem öffentlichen Datenverschlüsselungsschlüssel k entschlüsselt. In einem dem Schritt 77 folgenden Schritt 78 wird eine Testsequenz-Antwort mittels des sowohl dem entsprechenden Wartungszentrum 3, 31 oder 32 als auch dem Kraftfahrzeug 1 bekannten Antwortalgorithmus gebildet und mit der mit dem öffentlichen Datenverschlüsselungsschlüssel k entschlüsselten verschlüsselten Testsequenz-Antwort verglichen. Stimmen die beiden Testsequenz-Antworten überein wird die von dem entsprechenden Wartungszentrum 3, 31 oder 32 gesendete verschlüsselte Testsequenz-Antwort als korrekt angesehen. In diesem Fall sieht das Kraftfahrzeug 1 das entsprechende Wartungszentrum 3, 31 oder 32 als autorisiert an.

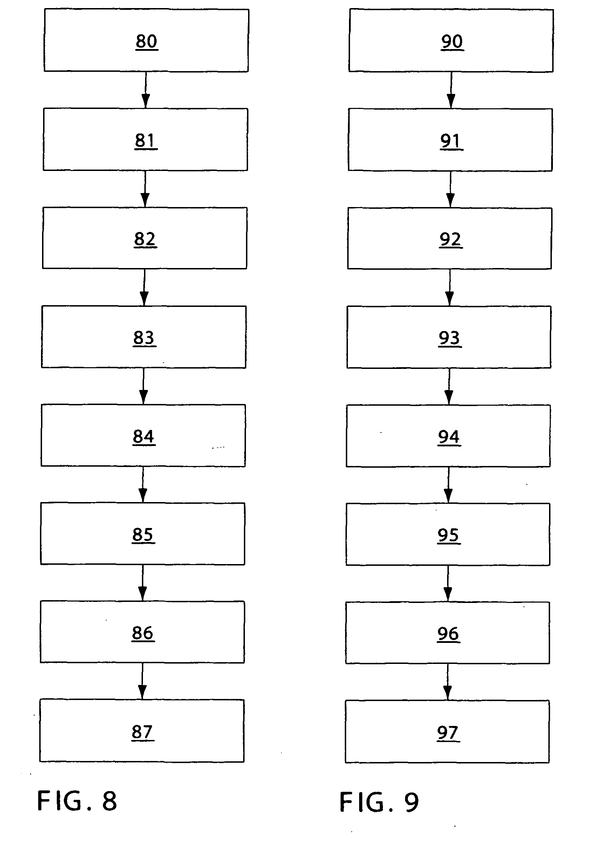

Fig. 8 zeigt ein Ausführungsbeispiel für Verfahrensschritte einer Datenübertragungsphase 58, die insbesondere nur nach erfolgreicher Autorisierung erfolgt. Dabei wird in einem Schritt 80 von der auf dem Kraftfahrzeug 1 angeordneten Datenverarbeitungsanlage 6 ein temporärer, gemäß diesem Ausführungsbeispiel nur für die folgende Datenübertragung gültiger, dritter (geheimer) Datenverschlüsselungsschlüssel s gebildet. In einem anschließenden Schritt 81 wird der dritte (geheime) Datenverschlüsselungsschlüssel s mittels des ersten öffentlichen Datenverschlüsselungsschlüssels k verschlüsselt und in einem weiteren Schritt 82 über den öffentlich zugänglichen Nachrichtenkanal 2 an das entsprechende Wartungszentrum 3, 31 oder 32 übertragen.

Dem Schritt 82 folgt ein Schritt 83, in dem der mit dem ersten öffentlichen Datenverschlüsselungsschlüssel k verschlüsselte dritte (geheime) Datenverschlüsselungsschlüssel s im entsprechenden Wartungszentrum 3, 31 oder 32 mittels des ersten privaten zum ersten öffentlichen Datenverschlüsselungsschlüssel k gehörigen Datenentschlüsselungsschlüssel k* entschlüsselt wird. Anschließend werden die Daten zum Parametrieren, Laden und/oder Verändern des sicherheitsrelevanten Programmcodes mit dem dritten (geheimen) Datenverschlüsselungsschlüssel s in einem Schritt 84 verschlüsselt und in einem Schritt 85 über den öffentlich zugänglichen Nachrichtenkanal 2 an das Kraftfahrzeug 1 bzw. die Datenverarbeitungsanlage 6 übertragen.

Dem Schritt 85 folgt ein Schritt 86, in dem die mit dem dritten (geheimen) Datenverschlüsselungsschlüssel s verschlüsselten Daten zum Parametrieren, Laden und/oder Verändern des sicherheitsrelevanten Programmcodes von der auf dem Kraftfahrzeug 1 angeordneten Datenverarbeitungsanlage 6 mittels des dritten (geheimen) Datenverschlüsselungsschlüssels s entschlüsselt werden. In einem abschließenden Schritt 87 folgt das eigentliche Parametrieren, Laden und/oder Verändern des sicherheitsrelevanten Programmcodes.

Das Verfahren gemäß Fig. 5, Fig. 6, Fig. 7 und Fig. 8 ist insbesondere im Zusammenhang mit einem gemäß Fig. 4 gebildeten Zertifikat ein besonders in Bezug auf unberechtigte Datenmanipulation sicheres Ausführungsbeispiel. Es setzt jedoch einen Dialog zwischen einem Wartungszentrum und einem Kraftfahrzeug voraus. Anhand von Fig. 9 ist ein alternatives Ausführungsbeispiel beschrieben, das besonders zum Parametrieren, Laden und/oder Verändern des sicherheitsrelevanten Programmcodes einer Vielzahl von Kraftfahrzeugen geeignet ist.

Dabei wird in einem Schritt 90 eine aus Zufallszeichen bestehende Zeichenfolge vorgegebener Länge von einem Wartungszentrum 3, 30, das im folgenden als Software-Broadcast-Server bezeichnet wird, erzeugt. Die Zeichenfolge wird in einem anschließenden Schritt 91 mittels eines ersten Datenverschlüsselungsschlüssels p verschlüsselt und in einem Schritt 92 von dem Software-Broadcast-Server 3 an das Kraftfahrzeug 1 übertragen.

In einem weiteren Schritt 93 wird die mit dem ersten Datenverschlüsselungsschlüssel p verschlüsselte Zeichenfolge von der auf dem Kraftfahrzeug 1 angeordneten Datenverarbeitungsanlage 6 mittels eines zum ersten Datenverschlüsselungsschlüssel p gehörigen ersten Datenentschlüsselungsschlüssels p*, der einer Mehrzahl von Kraftfahrzeugen bekannt ist, entschlüsselt. Dem Schritt 93 folgt ein Schritt 94, in dem von der auf dem Kraftfahrzeug 1 angeordneten Datenverarbeitungsanlage 6 aus der Zeichenfolge ein, insbesondere temporärer, zweiter Datenverschlüsselungsschlüssel b gebildet wird.

In einem Schritt 95 wird auch in dem Software-Broadcast-Server 3, 30 aus der Zeichenfolge der zweite Datenverschlüsselungsschlüssel b gebildet. Es folgt ein Schritt 96, in dem die Daten zum Parametrieren, Laden und/oder Verändern des sicherheitsrelevanten Programmcodes mit dem zweiten Datenverschlüsselungsschlüssel b verschlüsselt und über den öffentlich zugänglichen Nachrichtenkanal 2 an das Kraftfahrzeug 1 oder an eine Mehrzahl von Kraftfahrzeugen übertragen werden.

Es folgt ein Schritt 97 in dem die verschlüsselten Daten zum Parametrieren, Laden und/oder Verändern des sicherheitsrelevanten Programmcodes von der auf dem Kraftfahrzeug 1 angeordneten Datenverarbeitungsanlage 6 mittels des zweiten Datenverschlüsselungsschlüssel b entschlüsselt werden. Danach wird der zweite Datenverschlüsselungsschlüssel b gelöscht. Es folgt das eigentliche Parametrieren, Laden und/oder Verändern des sicherheitsrelevanten Programmcodes.

Die Verfahren gemäß den Ausführungsbeispielen können als integriertes System implementiert sein, das beide Vorgehensweisen ermöglicht. So kann der mit Bezugszeichen bezeichnete Block Verschlüsselungszentrale und Software-Broadcast-Server sein.

### BEZUGSZEICHENLISTE

- 1: Kraftfahrzeug
- 2: öffentlich zugänglicher Nachrichtenkanal
- 3: Wartungszentrum, Software-Broadcast-Server
- 4, 5, 40, 41, 42,:
- 43, 44, 45, 46: Pfeile zur Andeutung von Datenflüssen
- 6: Datenverarbeitungsanlage
- 10: Infotainmentmodul
- 11: Computeranordnung
- 12: nicht-sicherheitsrelevantes Modul
- 13: Verbindungsmodul
- 14: Bluetooth Schnittstelle
- 15: WLAN Schnittstelle
- 16: GSM/GRPS Schnittstelle
- 17: Funkschnittstelle
- 20: MOST Netzwerk
- 21: CAN Bus
- 24.1, 24.2, 24.3,:
- 24.4, 24.5, 24.6: Terminals
- 25.1, 25.2, 25.3,:
- 25.4, 25.5: Fahrsicherheit des Kraftfahrzeugs betreffende Komponenten
- 27: Datenspeicher
- 30: Verschlüsselungszentrale, Wartungszentrum, Software-Broadcast-Server
- 31,32: Wartungszentrum
- 31.1, 31.2, 31.3,:
- 31.4, 31.5, 32.1,:
- 32.2, 32.3, 32.4,:
- 32.5: Recheneinrichtungen
- 33, 34: Wartungsserver
- 50, 51, 52, 53, 54,:
- 56, 57, 58, 60, 61,:
- 62, 63, 70, 71, 72,:
- 73, 74, 75, 76, 77,:
- 78, 80, 81, 82, 83,:
- 84, 85, 86, 87, 88,:
- 90, 91, 92, 93, 94,:
- 95, 96, 97: Schritte
- b, b*, ε, ε* k, k*,:
- p, p*, s, s*: Datenschlüssel
- X: Identifizierungsdokument
- h, h', h*, h~: Hashwert

## Patentansprüche

1. Verfahren zum Parametrieren, Laden und/oder Verändern eines, insbesondere sicherheitsrelevantem, Programmcodes, der auf einem Datenspeicher (27) auf einem Kraftfahrzeug (1) gespeichert ist und mittels dessen Funktionen auf dem Kraftfahrzeug (1) implementiert sind, die die Fahrsicherheit des Kraftfahrzeugs (1) betreffen, wobei Daten zum Parametrieren, Laden und/oder Verändern des sicherheitsrelevanten Programmcodes von einem Wartungszentrum an das Kraftfahrzeug (1) über einen öffentlich zugänglichen Nachrichtenkanal (2) übertragen werden, **dadurch gekennzeichnet, dass** von dem Kraftfahrzeug (1) ein temporärer Datenverschlüsselungsschlüssel s gebildet, an das Wartungszentrum übertragen und von dem Wartungszentrum zum Verschlüsseln der zu übertragenden Daten zum Parametrieren, Laden und/oder Verändern des sicherheitsrelevanten Programmcodes verwendet wird, und/oder dass vor der Übertragung der Daten zum Parametrieren, Laden und/oder Verändern des sicherheitsrelevanten Programmcodes eine mit einem ersten Datenverschlüsselungsschlüssel (p) verschlüsselte Zufallszeichenfolge von dem Wartungszentrum (3, 31, 32) an das Kraftfahrzeug (1) über den öffentlich zugänglichen Nachrichtenkanal (2) übertragen, von dem Kraftfahrzeug (1) nach Entschlüsseln der verschlüsselten Zufallszeichenfolge aus der Zufallszeichenfolge ein zweiter Datenverschlüsselungsschlüssel (b) gebildet wird, mit dem die von der Wartungszentrale über den öffentlich zugänglichen Nachrichtenkanal (2) übertragenen verschlüsselten Daten zum Parametrieren, Laden und/oder Verändern des sicherheitsrelevanten Programmcodes entschlüsselt werden.

2. Verfahren nach Anspruch 1, **dadurch gekennzeichnet, dass** vor der Übertragung der Daten zum Parametrieren, Laden und/oder Verändern des sicherheitsrelevanten Programmcodes über den öffentlich zugänglichen Nachrichtenkanal (2) ein Zertifikat von dem Wartungszentrum an das Kraftfahrzeug (1) übertragen wird.

3. Verfahren nach Anspruch 2, **dadurch gekennzeichnet, dass** zur Erstellung des Zertifikates ein Identifizierungsdokument (X) erzeugt wird, das zumindest einen ersten öffentlichen Datenverschlüsselungsschlüssel (k) enthält.

4. Verfahren nach Anspruch 3, **dadurch gekennzeichnet, dass** zur Generierung des Zertifikates aus dem Identifizierungsdokument (X) ein Hashwert (h) gebildet wird.

5. Verfahren nach Anspruch 4, **dadurch gekennzeichnet, dass** aus dem Hashwert (h) durch Verschlüsselung mit einem zweiten privaten Datenverschlüsselungsschlüssel (ε*) ein verschlüsselter Hashwert (h*) gebildet wird.

6. Verfahren nach Anspruch 5, **dadurch gekennzeichnet, dass** das Zertifikat aus dem Identifizierungsdokument und dem verschlüsselten Hashwert (h*) zusammengesetzt wird.

7. Verfahren nach einem der Ansprüche 2 bis 6, **dadurch gekennzeichnet, dass** das Zertifikat in einer von dem Wartungszentrum (3, 31, 32) verschiedenen Verschlüsselungszentrale (30) erzeugt wird.

8. Verfahren nach Anspruch 7, **dadurch gekennzeichnet, dass** das Zertifikat von einer von dem Wartungszentrum (3, 31, 32) verschiedenen Verschlüsselungszentrale (30) an das Wartungszentrum (3, 31, 32) übertragen wird.

9. Verfahren nach Anspruch 8, **dadurch gekennzeichnet, dass** der verschlüsselte Hashwert (h*) mittels eines zweiten öffentlichen zum zweiten privaten Datenverschlüsselungsschlüssel (ε*) gehörigen Datenentschlüsselungsschlüssels (ε) von dem Kraftfahrzeug (1) entschlüsselt wird.

10. Verfahren nach Anspruch 9, **dadurch gekennzeichnet, dass** von dem Kraftfahrzeug (1) ein eigener verschlüsselter Hashwert (h~*) gebildet und mit dem verschlüsselten Hashwert (h*) verglichen wird.

11. Verfahren nach Anspruch 10 **dadurch gekennzeichnet, dass** das Zertifikat als nicht-manipuliert angesehen wird, wenn der verschlüsselte Hashwert (h*) mit dem eigenen verschlüsselten Hashwert (h~*) übereinstimmt.

12. Verfahren nach einem der Ansprüche 3 bis 11, **dadurch gekennzeichnet, dass** von dem Kraftfahrzeug (1) eine Testsequenz mit dem ersten öffentlichen Datenverschlüsselungsschlüssel (k) verschlüsselt wird.

13. Verfahren nach Anspruch 12, **dadurch gekennzeichnet, dass** die Testsequenz eine Folge von Zufallszeichen ist, die von dem Kraftfahrzeug (1) erzeugt wird.

14. Verfahren nach Anspruch 12 oder 13, **dadurch gekennzeichnet, dass** die mit dem ersten öffentlichen Datenverschlüsselungsschlüssel (k) verschlüsselte Testsequenz über den öffentlich zugänglichen Nachrichtenkanal (2) an das Wartungszentrum (3, 31, 32) übertragen wird.

15. Verfahren nach Anspruch 14, **dadurch gekennzeichnet, dass** die mit dem ersten öffentlichen Datenverschlüsselungsschlüssel (k) verschlüsselte Testsequenz im Wartungszentrum (3, 31, 32) mittels eines ersten privaten zum ersten öffentlichen Datenverschlüsselungsschlüssel (k) gehörigen Datenentschlüsselungsschlüssels (k*) entschlüsselt wird.

16. Verfahren nach Anspruch 15, **dadurch gekennzeichnet, dass** im Wartungszentrum (3, 31, 32) mittels eines sowohl dem Wartungszentrum (3, 31, 32) als auch dem Kraftfahrzeug (1) bekannten Antwortalgorithmus eine Testsequenz-Antwort erzeugt und diese mittels des ersten privaten Datenentschlüsselungsschlüssels (k*) verschlüsselt wird.

17. Verfahren nach Anspruch 16, **dadurch gekennzeichnet, dass** die mit dem ersten privaten Datenentschlüsselungsschlüssel (k*) verschlüsselte Testsequenz-Antwort über den öffentlich zugänglichen Nachrichtenkanal (2) an das Kraftfahrzeug (1) übertragen wird.

18. Verfahren nach Anspruch 17, **dadurch gekennzeichnet, dass** die mit dem ersten privaten Datenentschlüsselungsschlüssel (k*) verschlüsselte Testsequenz-Antwort vom Kraftfahrzeug (1) mit dem öffentlichen Datenverschlüsselungsschlüssel (k) entschlüsselt und auf Korrektheit überprüft wird.

19. Verfahren nach Anspruch 18, **dadurch gekennzeichnet, dass** das Kraftfahrzeug (1) das Wartungszentrum (3, 31, 32) als autorisiert ansieht, wenn die Testsequenz-Antwort als korrekt angesehen wird.

20. Verfahren nach einem der vohergehenden Ansprüche, **dadurch gekennzeichnet, dass** der dritte Datenverschlüsselungsschlüssel s mittels des ersten öffentlichen Datenverschlüsselungsschlüssels (k) verschlüsselt wird.

21. Verfahren nach Anspruch 20, **dadurch gekennzeichnet, dass** der mit dem ersten öffentlichen Datenverschlüsselungsschlüssel (k) verschlüsselte Datenverschlüsselungsschlüssel s über den öffentlich zugänglichen Nachrichtenkanal (2) an das Wartungszentrum (3, 31, 32) übertragen wird.

22. Verfahren nach Anspruch 22, **dadurch gekennzeichnet, dass** der mit dem ersten öffentlichen Datenverschlüsselungsschlüssel (k) verschlüsselte Datenverschlüsselungsschlüssel s mittels des ersten privaten zum ersten öffentlichen Datenverschlüsselungsschlüssel (k) gehörigen Datenentschlüsselungsschlüssels (k*) entschlüsselt wird.

23. Verfahren nach Anspruch 22, **dadurch gekennzeichnet, dass** die Daten zum Parametrieren, Laden und/oder Verändern des sicherheitsrelevanten Programmcodes mit dem Datenverschlüsselungsschlüssel s verschlüsselt und über den öffentlich zugänglichen Nachrichtenkanal (2) an das Kraftfahrzeug (1) übertragen werden.

24. Verfahren nach einem der vohergehenden Ansprüche, **dadurch gekennzeichnet, dass** die mit dem dritten Datenverschlüsselungsschlüssel s verschlüsselten Daten zum Parametrieren, Laden und/oder Verändern des sicherheitsrelevanten Programmcodes vom Kraftfahrzeug (1) mittels des Datenverschlüsselungsschlüssels s entschlüsselt werden.

25. Verfahren nach einem der vohergehenden Ansprüche, **dadurch gekennzeichnet, dass** die Zufallszeichenfolge vor der Übertragung von dem Wartungszentrum (3, 31, 32) an das Kraftfahrzeug (1) mittels eines ersten Datenverschlüsselungsschlüssels (p) verschlüsselt wird.

26. Verfahren nach Anspruch 25, **dadurch gekennzeichnet, dass** die mit dem ersten Datenverschlüsselungsschlüssel (p) verschlüsselte Zufallszeichenfolge von dem Wartungszentrum (3, 31, 32) an das Kraftfahrzeug (1) übertragen wird.

27. Verfahren nach Anspruch 26, **dadurch gekennzeichnet, dass** die mit dem ersten Datenverschlüsselungsschlüssel (p) verschlüsselte Zufallszeichenfolge von dem Kraftfahrzeug (1) mittels eines zum ersten Datenverschlüsselungsschlüssel (p) gehörigen ersten Datenentschlüsselungsschlüssels (p*) entschlüsselt wird.

28. Verfahren nach Anspruch 27, **dadurch gekennzeichnet, dass** der erste Datenentschlüsselungsschlüssel(p*) einer Mehrzahl von Kraftfahrzeugen bekannt ist.

29. Verfahren nach einem der vohergehenden Ansprüche, **dadurch gekennzeichnet, dass** in der Wartungszentrale aus der Zufallszeichenfolge ein zweiter Datenverschlüsselungsschlüssel (b) gebildet wird.

30. Verfahren nach Anspruch 29, **dadurch gekennzeichnet, dass** vom Kraftfahrzeug (1) aus der Zufallszeichenfolge der zweite Datenverschlüsselungsschlüssel (b) gebildet wird.

31. Verfahren nach Anspruch 29 oder 30, **dadurch gekennzeichnet, dass** die Daten zum Parametrieren, Laden und/oder Verändern des sicherheitsrelevanten Programmcodes mit dem zweiten Datenverschlüsselungsschlüssel (b) verschlüsselt und über den öffentlich zugänglichen Nachrichtenkanal (2) an das Kraftfahrzeug (1) übertragen werden.

32. Verfahren nach Anspruch 29 oder 30, **dadurch gekennzeichnet, dass** die Daten zum Parametrieren, Laden und/oder Verändern des sicherheitsrelevanten Programmcodes mit dem zweiten Datenverschlüsselungsschlüssel (b) verschlüsselt und über den öffentlich zugänglichen Nachrichtenkanal (2) an eine Mehrzahl von Kraftfahrzeugen übertragen werden.

33. Verfahren nach Anspruch 31 oder 32, **dadurch gekennzeichnet, dass** die mit dem zweiten Datenverschlüsselungsschlüssel (b) verschlüsselten Daten zum Parametrieren, Laden und/oder Verändern des sicherheitsrelevanten Programmcodes vom Kraftfahrzeug (1) mittels des zweiten Datenverschlüsselungsschlüssels (b) entschlüsselt werden.

34. Verfahren nach einem der vorhergehenden Ansprüche, **dadurch gekennzeichnet, dass** Daten zum Parametrieren, Laden und/oder Verändern des sicherheitsrelevanten Programmcodes mittels eines temporären Datenentschlüsselungsschlüssels verschlüsselt übertragen werden.

35. Verfahren nach Anspruch 34, **dadurch gekennzeichnet, dass** der temporäre Datenentschlüsselungsschlüssel speziell für die Übertragung der Daten zum Parametrieren, Laden und/oder Verändern des sicherheitsrelevanten Programmcodes erzeugt wird.

36. Verfahren nach Anspruch 34 oder 35, **dadurch gekennzeichnet, dass** der temporäre Datenentschlüsselungsschlüssel in Abhängigkeit einer Zufallszeichenfolge erzeugt wird.

37. Datenverarbeitungsanlage (6) für ein Kraftfahrzeug (1) zur Durchführung eines Verfahrens zum Parametrieren, Laden und/oder Verändern von sicherheitsrelevantem Programmcode nach einem der vorhergehenden Ansprüche, wobei die Datenverarbeitungsanlage (6) einen Datenspeicher (27) aufweist, in dem der sicherheitsrelevante Programmcode gespeichert ist, mittels dessen Funktionen auf dem Kraftfahrzeug (1) implementiert sind, die die Fahrsicherheit des Kraftfahrzeugs (1) betreffen, wobei der Datenspeicher (27), in dem der sicherheitsrelevante Programmcode gespeichert ist, datentechnisch mit einer Schnittstelle für einen öffentlich zugänglichen Nachrichtenkanal (2) verbunden ist, **dadurch gekennzeichnet, dass** von dem Kraftfahrzeug (1) ein temporärer Datenverschlüsselungsschlüssel s bildbar und an das Wartungszentrum übertragbar ist, und/oder dass aus einer vor der Übertragung der Daten zum Parametrieren, Laden und/oder Verändern des sicherheitsrelevanten Programmcodes von dem Wartungszentrum (3. 31, 32) an das Kraftfahrzeug (1) über den öffentlich zugänglichen Nachrichtenkanal (2) übertragenen, mit einem ersten Datenverschlüsselungsschlüssel (p) verschlüsselten Zufallszeichenfolge nach Entschlüsseln der verschlüsselten Zufallszeichenfolge ein Datenverschlüsselungsschlüssel (b) bildbar ist, mit dem die von der Wartungszentrale über den öffentlich zugänglichen Nachrichtenkanal (2) übertragenen verschlüsselten Daten zum Parametrieren, Laden und/oder Verändern des sicherheitsrelevanten Programmcodes entschlüsselt werden.

38. Datenverarbeitungsanlage (6) für ein Kraftfahrzeug (1) nach Anspruch 37, **dadurch gekennzeichnet, dass** sie eine Computeranordnung (11) zur Entschlüsselung verschlüsselt übermittelter Daten zum Parametrieren, Laden und/oder Verändern des sicherheitsrelevanten Programmcodes aufweist.

39. Datenverarbeitungsanlage (6) für ein Kraftfahrzeug (1) nach Anspruch 38, **dadurch gekennzeichnet, dass** die Computeranordnung (11) zur Erzeugung einer Testzeichenfolge ausgebildet ist.

40. Datenverarbeitungsanlage (6) für ein Kraftfahrzeug (1) nach Anspruch 39, **dadurch gekennzeichnet, dass** die Computeranordnung (11) zur Verschlüsselung der Testzeichenfolge ausgebildet ist.

41. Datenverarbeitungsanlage (6) für ein Kraftfahrzeug (1) nach Anspruch 38, 39 oder 40, **dadurch gekennzeichnet, dass** sie eine Funktion enthält, mittels derer auf einer empfangenen Zeichenfolge ein Datenverschlüsselungsschlüssel (b) zur Entschlüsselung verschlüsselt übermittelter Daten zum Parametrieren, Laden und/oder Verändern des sicherheitsrelevanten Programmcodes errechenbar ist.

42. Kraftfahrzeug (1), **dadurch gekennzeichnet, dass** es eine Datenverarbeitungsanlage (6) nach Anspruch 37, 38, 39, 40 oder 41 aufweist.

## Claims

1. Method for parameterizing, loading and/or altering a program code, particularly one relevant to safety, which is stored in a data store (27) in a motor vehicle (1) and which is used to implement functions on the motor vehicle (1) which relate to the travelling safety of the motor vehicle (1), with data for parameterizing, loading and/or altering the safety-relevant program code being transmitted from a maintenance centre to the motor vehicle (1) using a publicly accessible communication channel (2), **characterized in that** the motor vehicle (1) forms a temporary data encryption key s, transmits it to the maintenance centre, and the maintenance centre uses it to encrypt the data for parameterizing, loading and/or altering the safety-relevant program code which are to be transmitted, and/or **in that** before the data for parameterizing, loading and/or altering the safety-relevant program code are transmitted a random character string encrypted using a first data encryption key (p) is transmitted from the maintenance centre (3, 31, 32) to the motor vehicle (1) using the publicly accessible communication channel (2), and the motor vehicle (1), having decrypted the encrypted random character string, uses the random character string to form a second data encryption key (b) which is used to decrypt the encrypted data for parameterizing, loading and/or altering the safety-relevant program code which have been transmitted by the maintenance centre using the publicly accessible communication channel (2).

2. Method according to Claim 1, **characterized in that** before the data for parameterizing, loading and/or altering the safety-relevant program code are transmitted the publicly accessible communication channel (2) is used to transmit a certificate from the maintenance centre to the motor vehicle (1).

3. Method according to Claim 2, **characterized in that** to create the certificate an identification document (X) is produced which contains at least one first public data encryption key (k).

4. Method according to Claim 3, **characterized in that** to generate the certificate a hash value (h) is formed from the identification document (X).

5. Method according to Claim 4, **characterized in that** an encrypted hash value (h*) is formed from the hash value (h) by means of encryption using a second private data encryption key (ε*).

6. Method according to Claim 5, **characterized in that** the certificate is compiled from the identification document and the encrypted hash value (h*).

7. Method according to one of Claims 2 to 6, **characterized in that** the certificate is produced in an encryption centre (30) which is different from the maintenance centre (3, 31, 32).

8. Method according to Claim 7, **characterized in that** the certificate is transmitted to the maintenance centre (3, 31, 32) from an encryption centre (30) which is different from the maintenance centre (3, 31, 32).

9. Method according to Claim 8, **characterized in that** the encrypted hash value (h*) is decrypted using a second public data decryption key (ε), associated with the second private data encryption key (ε*), from the motor vehicle (1).

10. Method according to Claim 9, **characterized in that** the motor vehicle (1) forms a separate encrypted hash value (h~*) and compares it with the encrypted hash value (h*).

11. Method according to Claim 10, **characterized in that** the certificate is considered not to be manipulated if the encrypted hash value (h*) matches the separate encrypted hash value (h~*).

12. Method according to one of Claims 3 to 11, **characterized in that** the motor vehicle (1) encrypts a test sequence using the first public data encryption key (k).

13. Method according to Claim 12, **characterized in that** the test sequence is a string of random characters which is produced by the motor vehicle (1).

14. Method according to Claim 12 or 13, **characterized in that** the test sequence encrypted using the first public data encryption key (k) is transmitted to the maintenance centre (3, 31, 32) using the publicly accessible communication channel (2).

15. Method according to Claim 14, **characterized in that** the test sequence encrypted using the first public data encryption key (k) is decrypted in the maintenance centre (3, 31, 32) using a first private data decryption key (k*) associated with the first public data encryption key (k).

16. Method according to Claim 15, **characterized in that** the maintenance centre (3, 31, 32) uses a response algorithm which is known both to the maintenance centre (3, 31, 32) and to the motor vehicle (1) to produce a test sequence response and encrypts said test sequence response using the first private data decryption key (k*).

17. Method according to Claim 16, **characterized in that** the test sequence response encrypted using the first private data decryption key (k*) is transmitted to the motor vehicle (1) using the publicly accessible communication channel (2).

18. Method according to Claim 17, **characterized in that** the test sequence response encrypted using the first private data decryption key (k*) is decrypted by the motor vehicle (1) using the public data encryption key (k) and is checked for correctness.

19. Method according to Claim 18, **characterized in that** the motor vehicle (1) considers the maintenance centre (3, 31, 32) to be authorized if the test sequence response is considered to be correct.

20. Method according to one of the preceding claims, **characterized in that** the third data encryption key s is encrypted using the first public data encryption key (k).

21. Method according to Claim 20, **characterized in that** the data encryption key s encrypted using the first public data encryption key (k) is transmitted to the maintenance centre (3, 31, 32) using the publicly accessible communication channel (2).

22. Method according to Claim 22, **characterized in that** the data encryption key s encrypted using the first public data encryption key (k) is decrypted using the first private data decryption key (k*) associated with the first public data encryption key (k).

23. Method according to Claim 22, **characterized in that** the data for parameterizing, loading and/or altering the safety-relevant program code are encrypted using the data encryption key s and are transmitted to the motor vehicle (1) using the publicly accessible communication channel (2).

24. Method according to one of the preceding claims, **characterized in that** the data for parameterizing, loading and/or altering the safety-relevant program code which are encrypted using the third data encryption key s are decrypted by the motor vehicle (1) using the data encryption key s.

25. Method according to one of the preceding claims, **characterized in that** the random character string is encrypted using a first data encryption key (p) before being transmitted from the maintenance centre (3, 31, 32) to the motor vehicle (1).

26. Method according to Claim 25, **characterized in that** the random character string encrypted using the first data encryption key (p) is transmitted from the maintenance centre (3, 31, 32) to the motor vehicle (1).

27. Method according to Claim 26, **characterized in that** the random character string encrypted using the first data encryption key (p) is decrypted by the motor vehicle (1) using a first data decryption key (p*) associated with the first data encryption key (p).

28. Method according to Claim 27, **characterized in that** the first data decryption key (p*) is known to a plurality of motor vehicles.

29. Method according to one of the preceding claims, **characterized in that** the maintenance centre forms a second data encryption key (b) from the random character string.

30. Method according to Claim 29, **characterized in that** the motor vehicle (1) forms the second data encryption key (b) from the random character string.

31. Method according to Claim 29 or 30, **characterized in that** the data for parameterizing, loading and/or altering the safety-relevant program code are encrypted using the second data encryption key (b) and are transmitted to the motor vehicle (1) using the publicly accessible communication channel (2).

32. Method according to Claim 29 or 30, **characterized in that** the data for parameterizing, loading and/or altering the safety-relevant program code are encrypted using the second data encryption key (b) and are transmitted to a plurality of motor vehicles using the publicly accessible communication channel (2).

33. Method according to Claim 31 or 32, **characterized in that** the data for parameterizing, loading and/or altering the safety-relevant program code which are encrypted using the second data encryption key (b) are decrypted by the motor vehicle (1) using the second data encryption key (b).

34. Method according to one of the preceding claims, **characterized in that** data for parameterizing, loading and/or altering the safety-relevant program code are transmitted in a form encrypted using a temporary data decryption key.

35. Method according to Claim 34, **characterized in that** the temporary data decryption key is produced specifically for transmitting the data for parameterizing, loading and/or altering the safety-relevant program code.

36. Method according to Claim 34 or 35, **characterized in that** the temporary data decryption key is produced on the basis of a random character string.

37. Data processing installation (6) for a motor vehicle (1) for carrying out a method for parameterizing, loading and/or altering safety-relevant program code according to one of the preceding claims, where the data processing installation (6) has a data store (27) storing the safety-relevant program code which is used to implement functions on the motor vehicle (1) which relate to the travelling safety of the motor vehicle (1), the data store (27) in which the safety-relevant program code is stored being connected for data communication to an interface for a publicly accessible communication channel (2), **characterized in that** the motor vehicle (1) can form a temporary data encryption key s and can transmit it to the maintenance centre, and/or **in that** a random character string which is transmitted from the maintenance centre (3, 31, 32) to the motor vehicle (1) using the publicly accessible communication channel (2) before transmission of the data for parameterizing, loading and/or altering the safety-relevant program code and which is encrypted using a first data encryption key (p) can be used, following decryption of the encrypted random character string, to form a data encryption key (b) which is used to decrypt the encrypted data for parameterizing, loading and/or altering the safety-relevant program code which have been transmitted by the maintenance centre using the publicly accessible communication channel (2).

38. Data processing installation (6) for a motor vehicle (1) according to Claim 37, **characterized in that** it has a computer arrangement (11) for decrypting data for parameterizing, loading and/or altering the safety-relevant program code which are transmitted in encrypted form.

39. Data processing installation (6) for a motor vehicle (1) according to Claim 38, **characterized in that** the computer arrangement (11) is designed to produce a test character string.

40. Data processing installation (6) for a motor vehicle (1) according to Claim 39, **characterized in that** the computer arrangement (11) is designed to encrypt the test character string.

41. Data processing installation (6) for a motor vehicle (1) according to Claim 38, 39 or 40, **characterized in that** it contains a function which can be used on a received character string to calculate a data encryption key (b) for decrypting data for parameterizing, loading and/or altering the safety-relevant program code which are transmitted in encrypted form.

42. Motor vehicle (1), **characterized in that** it has a data processing installation (6) according to Claim 37, 38, 39, 40 or 41.

## Revendications

1. Procédé pour paramétrer, charger et/ou modifier un code de programme, notamment se rapportant à la sécurité, lequel est enregistré sur une mémoire de données (27) sur un véhicule automobile (1) et au moyen duquel des fonctions qui concernent la sécurité de déplacement du véhicule automobile (1) sont mises en oeuvre sur le véhicule automobile (1), les données destinées au paramétrage, au chargement et/ou à la modification du code de programme se rapportant à la sécurité étant transmises au véhicule automobile (1) depuis un centre de maintenance par le biais d'un canal d'information (2) accessible au public, **caractérisé en ce qu'**une clé de cryptage de données temporaire s est calculée par le véhicule automobile (1), transmise au centre de maintenance et utilisée par le centre de maintenance pour le cryptage des données à transmettre destinées au paramétrage, au chargement et/ou à la modification du code de programme se rapportant à la sécurité et/ou **en ce qu'**avant la transmission des données destinées au paramétrage, au chargement et/ou à la modification du code de programme se rapportant à la sécurité, une série de caractères aléatoires cryptée avec une première clé de cryptage de données (p) est transmise par le centre de maintenance (3, 31, 32) au véhicule automobile (1) par le biais du canal d'information (2) accessible au public, une deuxième clé de cryptage de données (b) est calculée par le véhicule automobile (1) à partir de la série de caractères aléatoires après le décryptage de la série de caractères aléatoires cryptée et utilisée pour décrypter les données cryptées destinées au paramétrage, au chargement et/ou à la modification du code de programme se rapportant à la sécurité transmises par le centre de maintenance par le biais du canal d'information (2) accessible au public.

2. Procédé selon la revendication 1, **caractérisé en ce qu'**un certificat est transmis du centre de maintenance au véhicule automobile (1) avant la transmission des données destinées au paramétrage, au chargement et/ou à la modification du code de programme se rapportant à la sécurité par le biais du canal d'information (2) accessible au public.

3. Procédé selon la revendication 2, **caractérisé en ce qu'**un document d'identification (X) qui contient au moins une première clé de cryptage de données publique (k) est généré pour l'établissement du certificat.

4. Procédé selon la revendication 3, **caractérisé en ce qu'**une valeur de hachage (h) est calculée à partir du document d'identification (X) pour générer le certificat.

5. Procédé selon la revendication 4, **caractérisé en ce qu'**une valeur de hachage cryptée (h*) est calculée à partir de la valeur de hachage (h) en la cryptant avec une deuxième clé de cryptage de données privée (ε*) .

6. Procédé selon la revendication 5, **caractérisé en ce que** le certificat se compose du document d'identification et de la valeur de hachage cryptée (h*).

7. Procédé selon l'une des revendications 2 à 6, **caractérisé en ce que** le certificat est généré dans une centrale de cryptage (30) différente du centre de maintenance (3, 31, 32).

8. Procédé selon la revendication 7, **caractérisé en ce que** le certificat est transmis au centre de maintenance (3, 31, 32) par une centrale de cryptage (30) différente du centre de maintenance (3, 31, 32).

9. Procédé selon la revendication 8, **caractérisé en ce que** la valeur de hachage cryptée (h*) est décryptée par le véhicule automobile (1) au moyen d'une deuxième clé de décryptage de données publique (ε) appartenant à la deuxième clé de cryptage de données privée (ε*).

10. Procédé selon la revendication 9, **caractérisé en ce qu'**une valeur de hachage cryptée propre (h~*) est calculée par le véhicule automobile (1) et comparée avec la valeur de hachage cryptée (h*).

11. Procédé selon la revendication 10, **caractérisé en ce que** le certificat est considéré comme n'ayant pas été manipulé lorsque la valeur de hachage cryptée (h*) coïncide avec la valeur de hachage cryptée propre (h~*).

12. Procédé selon l'une des revendications 3 à 11, **caractérisé en ce qu'**une séquence de test est cryptée par le véhicule automobile (1) avec la première clé de cryptage de données publique (k).

13. Procédé selon la revendication 12, **caractérisé en ce que** la séquence de test est une série de caractères aléatoires qui est générée par le véhicule automobile (1).

14. Procédé selon la revendication 12 ou 13, **caractérisé en ce que** la séquence de test cryptée avec la première clé de cryptage de données publique (k) est transmise au centre de maintenance (3, 31, 32) par le biais du canal d'information (2) accessible au public.

15. Procédé selon la revendication 14, **caractérisé en ce que** la séquence de test cryptée avec la première clé de cryptage de données publique (k) est décryptée dans le centre de maintenance (3, 31, 32) au moyen d'une première clé de décryptage de données privée (k*) appartenant à la première clé de cryptage de données publique (k).

16. Procédé selon la revendication 15, **caractérisé en ce qu'**une réponse à la séquence de test est générée dans le centre de maintenance (3, 31, 32) au moyen d'un algorithme de réponse connu à la fois du centre de maintenance (3, 31, 32) et du véhicule automobile (1) et celle-ci est cryptée au moyen de la première clé de décryptage de données privée (k*).

17. Procédé selon la revendication 16, **caractérisé en ce que** la réponse à la séquence de test cryptée avec la première clé de décryptage de données privée (k*) est transmise au véhicule automobile (1) par le biais du canal d'information (2) accessible au public.

18. Procédé selon la revendication 17, **caractérisé en ce que** la réponse à la séquence de test cryptée avec la première clé de décryptage de données privée (k*) est décryptée par le véhicule automobile (1) avec la clé de cryptage de données publique (k) et son exactitude est vérifiée.

19. Procédé selon la revendication 18, **caractérisé en ce que** le véhicule automobile (1) considère que le centre de maintenance (3, 31, 32) est autorisé lorsque la réponse à la séquence de test est considérée correcte.

20. Procédé selon l'une des revendications précédentes, **caractérisé en ce que** la troisième clé de cryptage de données s est cryptée au moyen de la première clé de cryptage de données publique (k).

21. Procédé selon la revendication 20, **caractérisé en ce que** la clé de cryptage de données s cryptée avec la première clé de cryptage de données publique (k) est transmise au centre de maintenance (3, 31, 32) par le biais du canal d'information (2) accessible au public.

22. Procédé selon la revendication 22, **caractérisé en ce que** la clé de cryptage de données s cryptée avec la première clé de cryptage de données publique (k) est décryptée au moyen de la première clé de décryptage de données privée (k*) appartenant à la première clé de cryptage de données publique (k).

23. Procédé selon la revendication 22, **caractérisé en ce que** les données destinées au paramétrage, au chargement et/ou à la modification du code de programme se rapportant à la sécurité sont cryptées avec la clé de cryptage de données s puis transmises au véhicule automobile (1) par le biais du canal d'information (2) accessible au public.

24. Procédé selon l'une des revendications précédentes, **caractérisé en ce que** les données destinées au paramétrage, au chargement et/ou à la modification du code de programme se rapportant à la sécurité cryptées avec la troisième clé de cryptage de données s sont décryptées par le véhicule automobile (1) au moyen de la clé de cryptage de données s.

25. Procédé selon l'une des revendications précédentes, **caractérisé en ce que** la série de caractères aléatoires est cryptée au moyen d'une première clé de cryptage de données (p) avant la transmission du centre de maintenance (3, 31, 32) au véhicule automobile (1).

26. Procédé selon la revendication 25, **caractérisé en ce que** la série de caractères aléatoires cryptée avec la première clé de cryptage de données (p) est transmise au véhicule automobile (1) par le centre de maintenance (3, 31, 32).

27. Procédé selon la revendication 26, **caractérisé en ce que** la série de caractères aléatoires cryptée avec la première clé de cryptage de données (p) est décryptée par le véhicule automobile (1) au moyen d'une première clé de décryptage de données (p*) appartenant à la première clé de cryptage de données (p).

28. Procédé selon la revendication 27, **caractérisé en ce que** la première clé de décryptage de données (p*) est connue d'une pluralité de véhicules automobiles.

29. Procédé selon l'une des revendications précédentes, **caractérisé en ce qu'**une deuxième clé de cryptage de données (b) est calculée dans le centre de maintenance à partir de la série de caractères aléatoires.

30. Procédé selon la revendication 29, **caractérisé en ce que** la deuxième clé de cryptage de données (b) est calculée par le véhicule automobile (1) à partir de la série de caractères aléatoires.

31. Procédé selon la revendication 29 ou 30, **caractérisé en ce que** les données destinées au paramétrage, au chargement et/ou à la modification du code de programme se rapportant à la sécurité sont cryptées avec la deuxième clé de cryptage de données (b) puis transmises au véhicule automobile (1) par le biais du canal d'information (2) accessible au public.

32. Procédé selon la revendication 29 ou 30, **caractérisé en ce que** les données destinées au paramétrage, au chargement et/ou à la modification du code de programme se rapportant à la sécurité sont cryptées avec la deuxième clé de cryptage de données (b) puis transmises à une pluralité de véhicules automobiles par le biais du canal d'information (2) accessible au public.

33. Procédé selon la revendication 31 ou 32, **caractérisé en ce que** les données destinées au paramétrage, au chargement et/ou à la modification du code de programme se rapportant à la sécurité cryptées avec la deuxième clé de cryptage de données (b) sont décryptées par le véhicule automobile (1) au moyen de la deuxième clé de cryptage de données (b).

34. Procédé selon l'une des revendications précédentes, **caractérisé en ce que** des données destinées au paramétrage, au chargement et/ou à la modification du code de programme se rapportant à la sécurité sont transmises en étant cryptées au moyen d'une clé de décryptage de données temporaire.

35. Procédé selon la revendication 34, **caractérisé en ce que** la clé de décryptage de données temporaire est générée spécialement pour la transmission des données destinées au paramétrage, au chargement et/ou à la modification du code de programme se rapportant à la sécurité.

36. Procédé selon la revendication 34 ou 35, **caractérisé en ce que** la clé de décryptage de données temporaire est générée en fonction d'une série de caractères aléatoires.

37. Équipement de traitement de données (6) pour un véhicule automobile (1) destiné à mettre en oeuvre un procédé pour paramétrer, charger et/ou modifier un code de programme se rapportant à la sécurité selon l'une des revendications précédentes, l'équipement de traitement de données (6) présentant une mémoire de données (27) dans laquelle est enregistré le code de programme se rapportant à la sécurité et au moyen duquel des fonctions qui concernent la sécurité de déplacement du véhicule automobile (1) sont mises en oeuvre sur le véhicule automobile (1), la mémoire de données (27), dans laquelle est enregistré le code de programme se rapportant à la sécurité, étant reliée du point de vue technique des données avec une interface pour un canal d'information (2) accessible au public, **caractérisé en ce qu'**une clé de cryptage de données temporaire s peut être calculée par le véhicule automobile (1) et peut être transmise au centre de maintenance et/ou **en ce qu'**une clé de cryptage de données (b), avec laquelle sont décryptées les données cryptées destinées au paramétrage, au chargement et/ou à la modification du code de programme se rapportant à la sécurité transmises par le centre de maintenance par le biais du canal d'information (2) accessible au public, peut être calculée, après de décryptage de la série de caractères aléatoires cryptée, à partir d'une série de caractères aléatoires cryptée avec une première clé de cryptage de données (p) transmise par le centre de maintenance (3, 31, 32) au véhicule automobile (1) par le biais du canal d'information (2) accessible au public avant la transmission des données destinées au paramétrage, au chargement et/ou à la modification du code de programme se rapportant à la sécurité.

38. Équipement de traitement de données (6) pour un véhicule automobile (1) selon la revendication 37, **caractérisé en ce qu'**il présente un arrangement d'ordinateur (11) pour le décryptage des données transmises cryptées destinées au paramétrage, au chargement et/ou à la modification du code de programme se rapportant à la sécurité.

39. Équipement de traitement de données (6) pour un véhicule automobile (1) selon la revendication 38, **caractérisé en ce que** l'arrangement d'ordinateur (11) est configuré pour générer une série de caractères de test.

40. Équipement de traitement de données (6) pour un véhicule automobile (1) selon la revendication 39, **caractérisé en ce que** l'arrangement d'ordinateur (11) est configuré pour crypter la série de caractères de test.

41. Équipement de traitement de données (6) pour un véhicule automobile (1) selon la revendication 38, 39 ou 40, **caractérisé en ce qu'**il contient une fonction au moyen de laquelle peut être calculée, à partir d'une série de caractères reçue, une clé de cryptage de données (b) pour le décryptage des données transmises cryptées destinées au paramétrage, au chargement et/ou à la modification du code de programme se rapportant à la sécurité.

42. Véhicule automobile (1), **caractérisé en ce qu'**il présente un équipement de traitement de données (6) selon la revendication 37, 38, 39, 40 ou 41.
